(19) Europäisches Patentamt

European Patent Office

Office européen des brevets

(11) Numéro de publication: **0 305 290 B1**

(12) **FASCICULE DE BREVET EUROPEEN**

(45) Date de publication de fascicule du brevet: **09.06.93** (51) Int. Cl.⁵: **G07F 5/24**, H04M 17/02

(21) Numéro de dépôt: **88402148.6**

(22) Date de dépôt: **24.08.88**

(54) **Procédé et dispositif d'encaissement.**

(30) Priorité: **26.08.87 FR 8711940**

(43) Date de publication de la demande:
**01.03.89 Bulletin 89/09**

(45) Mention de la délivrance du brevet:
**09.06.93 Bulletin 93/23**

(84) Etats contractants désignés:
**AT BE CH DE ES FR GB IT LI**

(56) Documents cités:
**EP-A- 0 151 761**
**DE-A- 2 247 340**
**FR-A- 2 402 980**
**US-A- 4 192 972**
**US-A- 4 462 512**

(73) Titulaire: **MONETEL**
**Rue Claude Chappe**
**F-07500 Granges les Valence(FR)**

(72) Inventeur: **Serradura, Thierry**
**146 route de Montélier**
**F-26000 Valence(FR)**

(74) Mandataire: **Bloch, Gérard et al**
**2, square de l'Avenue du Bois**
**F-75116 Paris (FR)**

## Description

La présente invention a tout d'abord pour objet un procédé d'encaissement d'au moins une somme d'argent à l'aide d'une combinaison de pièces de monnaie prises parmi un ensemble de pièces disponibles.

Un tel procédé est appliqué en particulier dans les dispositifs de paiement rencontrés sur les appareils automatiques, et en particulier sur les appareils publics de téléphone, ou "publiphones".

Dans ces appareils, l'usager introduit un certain nombre de pièces de monnaie dans le dispositif d'encaissement du publiphone, dispositif d'encaissement qui, compte-tenu de la somme à encaisser, en l'occurrence le montant de la communication, aiguille certaines des pièces dans la caisse du publiphone, et les autres vers une sébille où l'usager les récupère.

Le procédé le plus couramment mis en oeuvre dans les publiphones est le procédé connu de l'homme de métier sous le nom de procédé d'encaissement "au fil de l'eau". Dans ce procédé, lorsque l'usager, pour obtenir sa communication, a introduit un certain nombre de pièces, que l'on peut considérer comme l'ensemble des pièces disponibles, l'encaissement est effectué au fur et à mesure de l'arrivée des impulsions de taxation de la communication, les pièces ayant la plus faible valeur étant d'abord encaissées, puis les pièces de valeur supérieure, et ainsi de suite. Un tel procédé présente toutefois deux inconvénients. Le premier est que le montant total des pièces aiguillées vers la caisse risque d'être très supérieur à la somme réelle à encaisser. Ceci se produit par exemple lorsqu'il n'y a plus qu'une pièce de dix francs disponible, et que l'usager n'a plus besoin que d'un temps de communication correspondant sensiblement à une unité de taxation, soit moins de un franc.

Dans ce cas, le coût effectif de cette unité pour l'usager sera de dix francs. Le procédé "au fil de l'eau" manque donc de précision en ce qui concerne le montant effectif encaissé. Le deuxième inconvénient de ce procédé est que, comme les petites pièces sont toujours prises en premier, le rapport entre le montant et le volume de la totalité des pièces en caisse est faible. Or ceci est un inconvénient pour des appareils automatiques comme les publiphones, car lorsque la caisse est pleine et ne peut plus recevoir de nouvelles pièces, l'appareil ne fonctionne plus. Ceci oblige à vider souvent la caisse des appareils fréquemment utilisés, ce qui représente une contrainte.

On connaît par ailleurs par le document US-A-4 192 972 un procédé selon le préambule de la revendication 1.

Ce procédé permet de faire payer à l'usager le montant le plus juste, connaissant le nombre et la valeur des pièces qu'il a déposées dans l'appareil. En revanche, il ne permet pas d'optimiser le choix des pièces à encaisser de manière à obtenir le plus faible volume possible.

On connaît également par le document FR-A-2 402 980 un dispositif visant à encaisser le plus faible volume possible de pièces, mais le problème de la justesse du montant encaissé n'y est pas abordé.

La présente invention vise à pallier les inconvénients ci-dessus, en fournissant un nouveau procédé qui permet d'encaisser le montant le plus juste possible, et qui, moyennant certaines caractéristiques additionnelles, permet en outre d'optimiser le volume des pièces encaissées.

A cet effet, l'invention a pour objet un procédé selon la revendication 1.

Le procédé de l'invention permet de déterminer une pluralité de combinaisons ayant le montant le plus juste possible.

Avantageusement,
- on calcule le volume de chaque combinaison ayant ledit montant le plus proche,
- on détermine, parmi les volumes calculés, le volume le plus faible, et,
- on encaisse une des combinaisons ayant ledit volume le plus faible.

Ainsi, le volume des pièces en caisse se trouve réduit.

Avantageusement encore,
- on détermine une première desdites combinaisons en procédant comme suit :
- au cours d'une première série d'étapes, on affecte à la première combinaison un nombre de pièces disponibles ayant la plus forte valeur en procédant comme suit :
  - on classe les valeurs des pièces disponibles de façon décroissante depuis la première, la plus forte, jusqu'à la dernière, la plus faible,
  - on détermine le nombre maximal de pièces disponibles ayant la première valeur dont le montant, diminué de la valeur d'une pièce de la dernière valeur, soit inférieur au montant de la somme à encaisser,
  - on calcule un premier montant égal au montant de la totalité des pièces disponibles, diminué du montant de la totalité des pièces disponibles ayant la première valeur,
  - on calcule un second montant égal au montant de la somme à encaisser, diminué du montant dudit nombre maximal de pièces ayant la première valeur,

- on compare le premier montant au second montant, et,
- on affecte à la première combinaison un nombre de pièces ayant la première valeur égal audit nombre maximal lorsque le premier montant est supérieur ou égal au second montant, et égal audit nombre maximal augmenté d'une unité dans le cas contraire,
- au cours d'une deuxième série d'étapes, on affecte à la première combinaison un nombre de pièces disponibles ayant la valeur immédiatement inférieure à la plus forte valeur en procédant comme dans la première étape, mais à partir d'un ensemble de pièces disponibles dont sont exclues toutes les pièces ayant la plus forte valeur, et d'une somme à encaisser dont le montant est diminué du montant des pièces déjà affectées à la première combinaison, et,
- au cours de séries d'étapes successives analogues aux séries d'étapes précédentes on affecte ainsi à la première combinaison le nombre de pièces disponibles de chaque valeur, jusqu'à la dernière série d'étapes au cours de laquelle on détermine ledit nombre maximal sans diminuer son montant de la valeur d'une pièce de la dernière valeur,
- on détermine une deuxième combinaison en procédant comme pour la première combinaison, mais à partir d'un ensemble de pièces disponibles dont sont exclues toutes les pièces ayant la plus forte valeur,
- on détermine une troisième combinaison en procédant comme pour la première et la deuxième combinaisons, mais à partir d'un ensemble de pièces disponibles dont sont exclues toutes les pièces ayant la plus forte valeur et la valeur immédiatement inférieure, et,
- on procède ainsi jusqu'à la dernière combinaison obtenue uniquement à partir des pièces disponibles de la valeur la plus faible, ou jusqu'à ce que, à la fin d'une desdites séries d'étapes, la somme à encaisser diminuée du montant des pièces déjà affectées à une combinaison devienne nulle ou négative.

Avec un tel procédé de détermination des combinaisons de pièces, on peut dire qu'on obtient véritablement un encaissement au plus juste et dont le volume est très faible, car on constate que si les premières combinaisons déterminées sont surtout optimales en ce qui concerne le volume des pièces, les dernières le sont surtout en ce qui concerne le montant. La pluralité de combinaisons ainsi déterminées permet donc ensuite un bon choix.

L'invention a également pour objet un dispositif d'encaissement pour la mise en oeuvre du procédé précédent.

La présente invention sera mieux comprise grâce à la description suivante de la mise en oeuvre préférée du procédé de l'invention, et de la forme de réalisation préférée du dispositif de l'invention, faite en se référant aux dessins annexés, sur lesquels :
- la figure 1 représente, de façon schématique, un dispositif d'encaissement selon l'invention,
- la figure 2 représente un organigramme des tâches accomplies par le circuit de calcul du dispositif de la figure 1,
- la figure 3 représente un organigramme plus détaillé de la tâche de détermination de la pluralité de combinaisons de l'organigramme de la figure 2, et,
- la figure 4 représente, de façon plus détaillée, la tâche de détermination d'une combinaison de l'organigramme de la figure 3.

Un dispositif d'encaissement automatique, par exemple pour un appareil public de téléphone, ou "publiphone", est maintenant décrit. Ce dispositif est agencé pour encaisser une somme d'argent D, ou "débit", en l'occurrence le montant correspondant au prix de la communication que l'usager vient de passer, à l'aide d'une combinaison de pièces de monnaie prises parmi un ensemble de pièces disponibles, ou "stock", pièces introduites à cet effet par l'usager dans le publiphone.

En fait, il est plus exact de dire que le dispositif encaisse au moins la somme d'argent correspondant au débit, car, s'il s'avère impossible de combiner une partie des pièces disponibles pour que le montant total de cette partie soit rigoureusement égal au montant du débit, le dispositif encaissera une combinaison d'un montant légèrement supérieur.

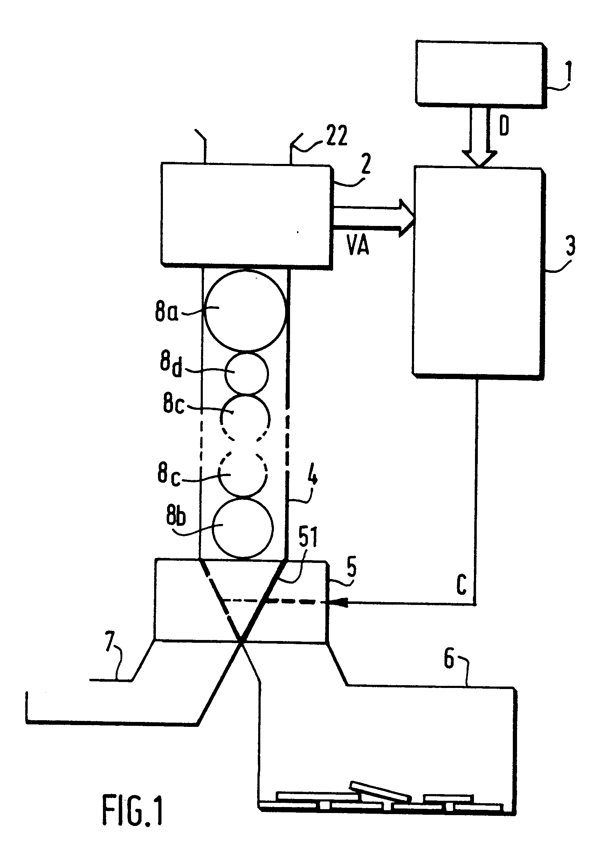

En référence à la figure 1, le dispositif d'encaissement comprend tout d'abord un dispositif 2 de détermination de la valeur de chaque pièce introduite dans un orifice d'introduction 22 dont il est pourvu. Le dispositif 2 est également pourvu d'une sortie pour les pièces, reliée ici à une glissière de stockage 4. La glissière de stockage 4 communique avec un dispositif d'aiguillage 5, pourvu d'un volet 51 à deux positions, permettant d'aiguiller chaque pièce soit vers une sébille 7 où l'usager peut la récupérer, soit vers la caisse 6 du publiphone.

Le dispositif 2 de détermination de la valeur de chaque pièce est un circuit de type connu, pourvu d'une sortie sur laquelle un signal électrique VA, ici numérique, est disponible pour indiquer le fait qu'une pièce a traversé le dispositif 2, ainsi que la valeur de cette pièce. Le signal VA est appliqué à une entrée d'un circuit de calcul 3, ici à microprocesseur. Le microprocesseur 3 reçoit également sur une autre entrée un signal numérique D représentatif de la somme à débiter, en provenance du compteur d'unités 1 dont est pourvu le publiphone. Le microprocesseur 3 est enfin pourvu d'une sortie binaire, délivrant un signal C de commande du volet 51 du dispositif d'aiguillage 5.

Le dispositif qui vient d'être décrit fonctionne comme suit.

L'usager introduit d'abord un certain nombre de pièces dans l'orifice 22, qui sont, après leur passage, stockées dans la glissière 4, et forment donc l'ensemble de pièces disponibles $8_a$, $8_b$, $8_c$ et $8_d$ représentées sur la figure 1. Il sera supposé dans la suite que les pièces peuvent être de quatre types différents, selon leur valeur $V_a$, $V_b$, $V_c$ ou $V_d$, par exemple en France 5F, 2F, 1F et 0,5F. Le dispositif 2 détermine, au passage, la valeur de chacune des pièces disponibles, et le microprocesseur 3 mémorise ces valeurs, ainsi que l'ordre dans lequel les pièces passent, et détermine le nombre de pièces disponibles pour chaque valeur. Le microprocesseur 3 connait donc la composition COS du stock de pièces disponibles, définie par le nombre $n_a$ de pièces disponibles ayant la valeur $V_a$, le nombre $n_b$ de pièces disponibles ayant la valeur $V_b$, et ainsi de suite. Ceci sera noté :

$$COS = (V_a, n_a; V_b, n_b; V_c, n_c; V_d, n_d) \qquad (1)$$

De plus, il sera supposé ici, pour simplifier, que :

$$V_a > V_b > V_c > V_d \qquad (2)$$

Le microprocesseur 3 calcule ici le montant S de la totalité des pièces disponibles, c'est-à-dire du stock, selon la formule

$$S = n_a V_a + n_b V_b + n_c V_c + n_d V_d \qquad (3)$$

Après avoir introduit les pièces en quantité suffisante, l'usager est de façon connue, autorisé à établir la communication, au cours de laquelle les unités sont comptées par le compteur 1. Pendant la communication, le microprocesseur 3 compare le montant D de la communication au montant S du stock. Lorsque le montant D, qui augmente alors au cours du temps, approche du montant S, l'usager en est averti. Il peut alors couper la communication, ou introduire de nouvelles pièces, auquel cas le microprocesseur calcule un nouveau montant S, plus élevé, du stock. Ainsi, lorsque l'usager a terminé sa communication, le montant D à encaisser, ou à débiter, est donc inférieur au montant S du stock. Il n'en est pas ainsi lorsque la communication a été interrompue de force par le publiphone, l'usager n'ayant pas interrompu la communication lui-même, ou introduit de nouvelles pièces avant l'instant d'interruption où D devient égal à S. Dans ce cas, le problème de l'encaissement est évidemment réglé.

Dans les autres cas, les plus fréquents, dès que l'usager a terminé sa communication, le microprocesseur 3, qui a donc mémorisé la composition COS du stock S et la somme D à débiter, détermine, parmi une pluralité de combinaisons possibles des pièces du stock, et comme cela sera mieux compris dans la suite, la combinaison la plus exacte et la moins volumineuse comme étant la combinaison à encaisser. Le microprocesseur 3, qui a par ailleurs mémorisé l'ordre dans lequel les pièces sont passées, donc l'ordre dans lequel elles sont disposées dans la glissière 4, commande alors, par l'intermédiaire du signal C et du volet 51, l'encaissement dans la caisse 6 des pièces affectées à la combinaison à encaisser, ou le retour vers l'usager, par la sébille 7, des pièces non affectées à cette combinaison.

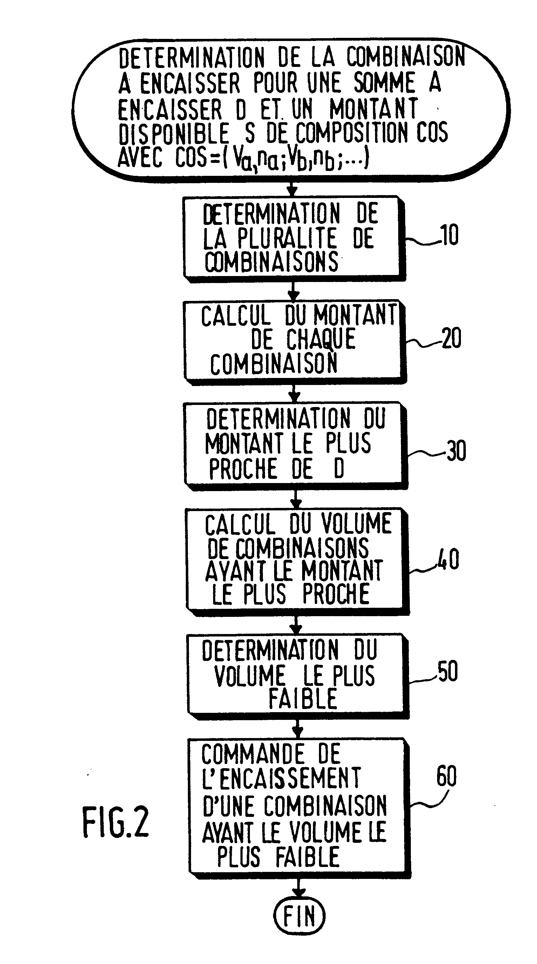

En référence à la figure 2, les différentes tâches accomplies par le microprocesseur 3 sont maintenant décrites.

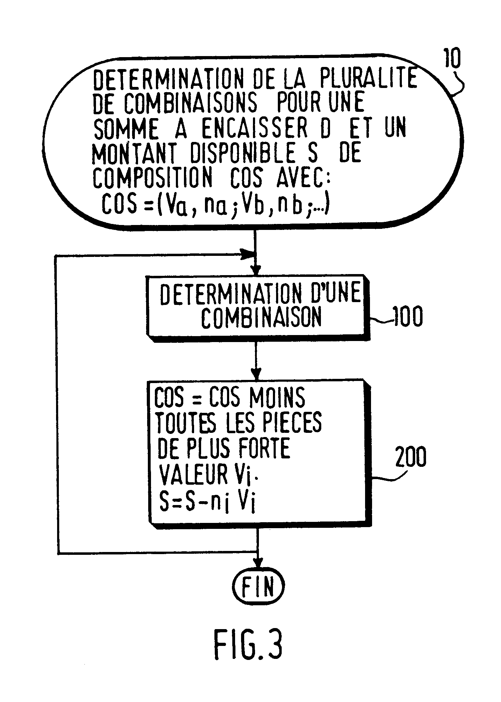

Tout d'abord, le microprocesseur 3, au cours d'une étape 10, détermine une pluralité de combinaisons différentes de pièces disponibles. Chaque combinaison est déterminée, d'une façon qui sera décrite plus en détail dans la suite de façon à ce que son montant soit légèrement supérieur ou égal au montant de la somme à encaisser, ou débit D. Comme on le voit sur la figure 3, qui décompose la tâche accomplie au cours de l'étape 10, une première combinaison $C_1$ est déterminée, au cours d'une étape 100 à partir de la totalité des pièces disponibles. Ensuite, au cours d'une étape 200, sont exclues du stock des pièces disponibles toutes les pièces de plus forte valeur, ici les pièces de valeur $V_a$ en nombre $n_a$. Il est alors déterminé, au cours d'un nouveau passage par l'étape 100, une deuxième combinaison $C_2$ à partir de ce stock diminué. Ensuite, sont exclues du stock, au cours d'un nouveau passage par l'étape 200, toutes les pièces de plus forte valeur, qui sont maintenant les pièces de valeur $V_b$ en nombre $n_b$. Alors il est déterminé, au cours d'un nouveau passage par l'étape 100, une troisième combinaison $C_3$, et ainsi de suite. Dans l'exemple présent où l'on a supposé quatre valeurs de pièces $V_a$, $V_b$, $V_c$ et $V_d$, il est donc en principe déterminé quatre combinaisons $C_1$, $C_2$, $C_3$ et $C_4$.

Ensuite, et en revenant à la figure 2, le microprocesseur 3 calcule, au cours d'une étape 20, le montant de chaque combinaison. Il se peut, bien sûr, que deux combinaisons différentes aient le même montant. Ainsi ou pourra trouver un montant $M_1$ pour la combinaison $C_1$, un montant $M_2$ identique pour les combinaisons $C_2$ et $C_3$, et un montant

$M_3$ pour la combinaison $C_4$.

Ensuite, au cours d'une étape 30, le montant le plus proche de la somme à encaisser D est déterminé par le microprocesseur 3. Il s'agit en fait du montant le plus faible, puisque le montant d'une combinaison est toujours supérieur ou égal au montant D, par exemple le montant $M_2$.

Ensuite, au cours d'une étape 40, le microprocesseur 3 calcule le volume de chaque combinaison ayant le montant le plus proche. Il s'agit donc ici des volumes $VO_2$ et $VO_3$ des combinaisons $C_2$ et $C_3$ de montant $M_2$. Pour permettre le calcul du volume des combinaisons, sont mémorisés dans la mémoire du microprocesseur 3 les volumes de chacun des différents types de pièces.

Ensuite, au cours d'une étape 50, le microprocesseur 3 détermine le volume le plus faible, par exemple $VO_3$.

Alors, au cours d'une étape 60, le microprocesseur 3 commande le dispositif 5 pour encaisser la combinaison $C_3$ qui a le volume le plus faible, ainsi que, bien sûr, le montant le plus proche.

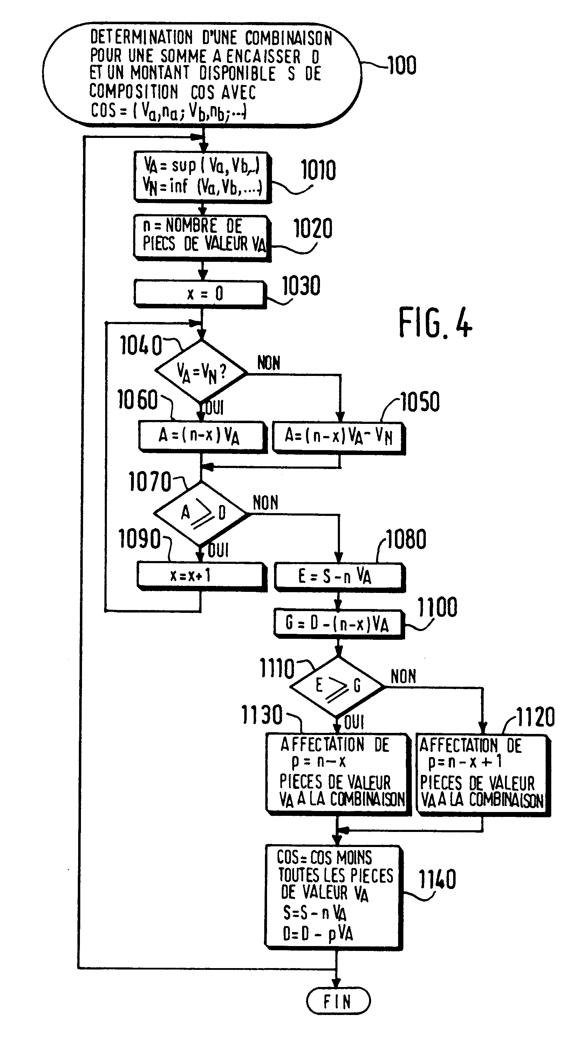

En référence à la figure 4, les différentes tâches accomplies par le microprocesseur 3 au cours de l'étape 100 de la figure 3, étape de détermination d'une combinaison, sont maintenant décrites.

Tout d'abord, au cours d'un premier passage par une série d'étapes 1010 à 1140, le microprocesseur 3 affecte à la combinaison un certain nombre de pièces disponibles ayant la plus forte valeur. En supposant que la combinaison à déterminer est la première $C_1$, il s'agit alors des pièces de valeur $V_a$. Naturellement, si la combinaison à déterminer est la deuxième, les pièces disponibles de plus forte valeur sont les pièces de valeur $V_b$, et ainsi de suite.

Au cours de l'étape 1010, le microprocesseur 3 classe les valeurs des pièces disponibles de façon décroissante, depuis la première $V_A$, la plus forte, jusqu'à la dernière $V_N$, la plus faible. Ainsi, lorsque le microprocesseur détermine la première combinaison, et avec les hypothèses faites sur les valeurs $V_a$, $V_b$, $V_c$ et $V_d$, le classement est :

$$V_A = V_a \quad V_B = V_b \quad V_C = V_c \text{ et } V_N = V_D = V_d \qquad (4)$$

mais lorsque le microprocesseur détermine la deuxième combinaison, le classement est :

$$V_A = V_b \quad V_B = V_c \text{ et } V_N = V_C = V_d \qquad (5)$$

Au cours des étapes 1020 à 1050, et 1070, en passant par la boucle 1090, le microprocesseur 3 détermine le nombre maximal, en l'occurrence le nombre (n-x) de pièces disponibles ayant la première valeur $V_A$ dont le montant, diminué de la valeur $V_N$ d'une pièce de la dernière valeur, soit inférieur au montant D de la somme à encaisser. Plus simplement, le microprocesseur 3 détermine le plus grand nombre (n-x) tel que la relation suivante soit satisfaite :

$$(n-x) V_A - V_N < D \qquad (6)$$

Pour ce faire, le microprocesseur 3 détermine d'abord le nombre n de pièces de valeur $V_A$ au cours de l'étape 1020, et initialise une variable entière x à la valeur nulle, au cours d'une étape 1030.

Ensuite, au cours de l'étape 1040, il détermine si la première valeur $V_A$ est égale à la dernière $V_N$. Au premier passage, qui est actuellement décrit, ceci n'est pas le cas, et il calcule, au cours de l'étape 1050, une quantité A telle que :

$$A = (n-x) V_A - V_N \qquad (7)$$

Au cours de l'étape 1070, il compare la quantité A au montant D, et si la quantité A est supérieure ou égale à ce montant, il augmente x d'une unité, au cours de l'étape 1090, et recommence les étapes 1040, 1050 et 1070 avec cette nouvelle valeur de x.

Ainsi, on peut dire que le microprocesseur 3 procède par essais et erreurs à partir du nombre total n de pièces disponibles ayant la première valeur $V_A$, nombre total qu'il diminue, unité par unité, jusqu'au nombre maximal (n-x) recherché.

Ce nombre maximal (n-x) étant déterminé, le microprocesseur 3 calcule, au cours de l'étape 1080, un premier montant E égal au montant S de la totalité des pièces disponibles diminué du montant de la totalité des pièces disponibles ayant la première valeur $V_A$, c'est-à-dire un montant E tel que :

$$E = S - n V_A \qquad (8)$$

Il sera noté que ce montant E représente le montant des pièces disponibles n'ayant pas la première valeur $V_A$, c'est-à-dire le montant qui reste disponible pour régler le reliquat à encaisser en supposant que l'on a encaissé un certain nombre de pièces de la première valeur $V_A$, et que l'on se tient à ce nombre.

Ensuite, le microprocesseur 3 calcule, au cours de l'étape 1100, un deuxième montant G égal au montant D de la somme à encaisser diminué du montant dudit nombre maximal de pièces ayant la première valeur $V_A$, c'est-à-dire un montant G tel que :

$$G = D - (n-x) V_A \qquad (9)$$

Il sera noté que ce montant G représente le reliquat à encaisser, en supposant que l'on a encaissé un nombre de pièces ayant la première valeur $V_A$ égal au nombre maximal (n-x).

Le microprocesseur compare alors, au cours de l'étape 1110, le premier montant E au deuxième montant G.

Lorsque le premier montant E est supérieur au deuxième montant G, il est évidemment possible d'encaisser un nombre (n-x) de pièces ayant la première valeur, puisque le stock restant de montant E permet de couvrir le reliquat à encaisser de montant G. Aussi, le microprocesseur affecte-t-il, à la combinaison qu'il est en train de déterminer, et au cours de l'étape 1130, un nombre p de pièces de valeur $V_A$ égal au nombre maximal (n-x), soit

$$p = n-x \quad (10)$$

Lorsque le premier montant E est inférieur au deuxième montant G, le microprocesseur affecte alors, à la combinaison, et au cours de l'étape 1120, un nombre p de pièces de valeur $V_A$ égal au nombre maximal (n-x) augmenté d'une unité, soit :

$$p = n-x + 1 \quad (11)$$

Le premier passage par la série d'étapes 1010 à 1140 est pratiquement terminé, un nombre p de pièces ayant la première valeur $V_A$, c'est-à-dire ici la valeur $V_a$, ayant été affecté à la combinaison.

Au cours de l'étape 1140, le microprocesseur 3 prépare le deuxième passage par la série 1010 à 1140, en déterminant un nouvel ensemble en pièces disponibles dont sont exclues les pièces ayant la plus forte valeur $V_a$, donc ici de composition COS telle que :

$$COS = (V_b, n_b; V_c, n_c; V_d, n_d) \quad (12)$$

et de montant S égal à :

$$S = n_b V_b + n_c V_c + n_d V_d \quad (13)$$

Au cours de l'étape 1140, le microprocesseur 3 détermine le nouveau montant de la somme à encaisser, égal au reliquat à encaisser lorsque l'on a encaissé les p pièces de valeur $V_A$, soit :

$$D = D - p V_A \quad (14)$$

Au cours du deuxième passage par la série d'étapes 1010 à 1040, le microprocesseur va alors affecter à la combinaison un certain nombre de pièces disponibles ayant la valeur immédiatement inférieure à la plus forte valeur $V_a$, soit ici la valeur $V_b$.

On notera que, après le deuxième passage par l'étape 1010, le classement sera :

$$V_A = V_b \; V_B = V_c \text{ et } V_N = V_C = V_d \quad (15)$$

Un troisième passage par la série d'étapes 1010 à 1040 permettra au microprocesseur 3 d'affecter à la combinaison un certain nombre de pièces de valeur $V_c$ et ici, un quatrième et dernier passage permettra d'affecter à la combinaison un certain nombre de pièces de valeur $V_d$.

Il est à noter toutefois que, lors du dernier passage par la série d'étapes 1010 à 1040, le microprocesseur 3 détermine le nombre maximal sans diminuer son montant de la valeur $V_N$ d'une pièce de la dernière valeur. En effet, lors du dernier passage, le classement après l'étape 1010 est nécessairement :

$$V_A = V_N = V_d \quad (16)$$

Alors, l'étape 1040 sera succédée par l'étape 1060, et la quantité A calculée sera, comme cela apparaît sur la figure 4 :

$$A = (n-x) V_A \quad (17)$$

Naturellement, dans l'organigramme de la figure 4, il est prévu, de façon non représentée dans un souci de simplicité, de passer en "Fin" dès que le nouveau débit D, calculé au cours de l'étape 1140 d'après la relation (14), devient nul ou négatif.

Afin de fixer les idées, un exemple concret est maintenant décrit. On suppose :

$$V_a = 5 \text{ F } V_b = 2 \text{ F } V_c = 1 \text{ F } V_d = 0,5 \text{ F} \quad (18)$$

On considère que l'ensemble des pièces disponibles comprend 1 pièce de 5 F, 3 pièces de 2 F et 2 pièces de 0,5 F. On a donc :

$$COS = (5 \text{ F}, 1; 2 \text{ F}, 3; 0,5 \text{ F}, 2) \quad (19)$$
$$S = 12 \text{ F} \quad (20)$$

On considère que le montant D de la somme à débiter est :

$$D = 6,50 \text{ F} \quad (21)$$

On détermine alors une première combinaison $C_1$ à partir de COS, S et D donnés par les relations 19, 20 et 21 précédentes.

Au cours d'un premier passage, on détermine successivement :
- étape 1010
: $V_A = 5 \text{ F } V_B = 2 \text{ F } V_N = V_C = 0,5 \text{ F}$
- étapes 1020-1070
: n-x = 1

- étape 1080

: E = 7 F

- étape 1100

: G = 1,50 F

- étape 1130

: p = 1

(on affecte donc 1 pièce de 5 F à la combinaison $C_1$)

- étape 1140

: S = 7 F D = 1,50 F

Au cours d'un deuxième passage, on détermine alors successivement :

- étape 1010

: $V_A$ = 2 F $V_N$ = $V_C$ = 0,5 F

- étapes 1020-1070

: n-x = 0

- étape 1080

: E = 1 F

- étape 1100

: G = 1,50 F

- étape 1120

: p = 1

(on affecte donc 1 pièce de 2 F à la combinaison $C_1$)

- étape 1140

: S = 1 F D = -0,5 F

le reliquat à débiter devenant négatif, on passe en "Fin".

La première combinaison $C_1$ comprend donc une pièce de 5 F et une pièce de 2 F et son montant est de 7 F.

Pour déterminer une deuxième combinaison $C_2$, on exclut de l'ensemble des pièces disponibles les pièces de plus forte valeur, donc ici la pièce de 5 F. On part donc de COS et S tels que :

$$COS = (2\ F,\ 3;\ 0,5\ F,\ 2) \qquad (22)$$
$$S = 7\ F \qquad (23)$$

en conservant le montant D conforme à celui de la relation (21) soit :

$$D = 6,50\ F \qquad (21)$$

Au cours d'un premier passage, on détermine successivement :

- étape 1010

: $V_A$ = 2 F $V_N$ = $V_C$ = 0,5 F

- étapes 1020-1070

: n-x = 3

- étape 1080

: E = 1 F

- étape 1100

: G = 0,5 F

- étape 1130

: p = 3

(On affecte donc 3 pièces de 2 F à la combinaison $C_2$)

- étape 1140

: S = 1 F D = 0,5 F

Au cours d'un deuxième passage, on détermine successivement :

- étape 1010

: $V_A$ = $V_N$ = 0,5 F

- étapes 1020-1070

: n-x = 0 (en passant par l'étape 1060)

- étape 1080

: E = 0 F

- étape 1100

: G = 0,5 G

- étape 1120

: p = 1

(on affecte donc 1 pièce de 0,5 à la combinaison $C_2$)

- étape 1140

: S = 0 D = 0

le reliquat à débiter devenant nul, on passe en "Fin".

La deuxième combinaison $C_2$ comprend donc trois pièces de 2 F et une pièce de 0,5 F, et son montant est de 6,50 F.

Ici, il n'est pas possible de déterminer de troisième ou de quatrième combinaison, car lorsque la pièce de 5 F et les pièces de 2 F sont exclues de l'ensemble du stock disponible, le montant disponible ne couvre plus le débit.

Dans ce cas, conformément à l'organigramme de la figure 2, la combinaison à encaisser sera la combinaison $C_2$, puisque son montant est égal à la somme à encaisser. Dans cet exemple choisi volontairement simple, la question du volume de la combinaison ne se pose pas, puisqu'une seule combinaison ayant le montant le plus faible est déterminée.

Naturellement, la portée de la présente demande n'est pas limitée au cas où les pièces sont réparties en quatre catégories de valeur, et l'invention s'applique, bien sûr, dans le cas d'un nombre quelconque de valeurs.

**Revendications**

1. Procédé d'encaissement d'au moins une somme d'argent (D) à l'aide d'une combinaison de pièces de monnaie prises parmi un ensemble de pièces disponibles, dans lequel :

   - on détermine la valeur de chacune des pièces disponibles ($8_a$-$8_d$) et le nombre de pièces disponibles pour chaque valeur déterminée,

   - on calcule le montant d'une pluralité de combinaisons ($C_1$-$C_4$) différentes de pièces disponibles,

   - on détermine, parmi les montants ($M_1$-$M_3$) desdites combinaisons, le montant ($M_2$) supérieur ou égal à et le plus proche de la somme (D) à encaisser,

- on encaisse une ($C_3$) des combinaisons ayant ledit montant ($M_2$), et
- on restitue à l'usager les pièces non affectées à la combinaison encaissée, caractérisé par le fait que :
- préalablement audit calcul, on sélectionne ladite pluralité de combinaisons de telle manière que chaque combinaison ait un montant ($M_1$-$M_3$) supérieur ou égal au montant de la somme (D) à encaisser et que figurent dans ladite pluralité une ou plusieurs combinaisons dont le montant soit, parmi toutes les combinaisons possibles dont le montant est supérieur ou égal à la somme à encaisser, le plus proche du montant de la somme à encaisser, ou égal à ce montant, et
- lors dudit calcul, on mémorise le montant associé à chaque combinaison sélectionnée.

2. Procédé d'encaissement selon la revendication 1, dans lequel :
- on calcule le volume ($VO_2$,$VO_3$) de chaque combinaison ($C_2$,$C_3$) ayant ledit montant ($M_2$) le plus proche,
- on détermine, parmi les volumes calculés, le volume ($VO_3$) le plus faible, et,
- on encaisse une ($C_3$) des combinaisons ayant ledit volume ($VO_3$) le plus faible.

3. Procédé selon l'une des revendications 1 ou 2, dans lequel :
- on détermine une première ($C_1$) desdites combinaisons en procédant comme suit :
  - au cours d'une première série d'étapes, on affecte à la première combinaison ($C_1$) un nombre de pièces disponibles ayant la plus forte valeur en procédant comme suit :
  - on classe les valeurs des pièces disponibles de façon décroissante depuis la première ($V_A$), la plus forte, jusqu'à la dernière ($V_N$), la plus faible,
  - on détermine le nombre maximal (n-x) de pièces disponibles ayant la première valeur ($V_A$) dont le montant, diminué de la valeur ($V_N$) d'une pièce de la dernière valeur, soit inférieur au montant (D) de la somme à encaisser,
  - on calcule un premier montant (S-n$V_A$) égal au montant (S) de la totalité des pièces disponibles, diminué du montant (n $V_A$) de la totalité des pièces disponibles ayant la première valeur ($V_A$),

- on calcule un second montant (D-n$V_A$-x$V_A$) égal au montant (D) de la somme à encaisser, diminué du montant dudit nombre maximal (n-x) de pièces ayant la première valeur ($V_A$),
- on compare le premier montant au second montant, et,
- on affecte à la première combinaison un nombre de pièces ayant la première valeur ($V_A$) égal audit nombre maximal (n-x) lorsque le premier montant est supérieur ou égal au second montant, et égal audit nombre maximal augmenté d'une unité (n-x + 1) dans le cas contraire,
- au cours d'une deuxième série d'étapes, on affecte à la première combinaison ($C_1$) un nombre de pièces disponibles ayant la valeur immédiatement inférieure à la plus forte valeur en procédant comme dans la première étape, mais à partir d'un ensemble de pièces disponibles dont sont exclues toutes les pièces ayant la plus forte valeur, et d'une somme à encaisser dont le montant est diminué du montant des pièces déjà affectées à la première combinaison ($C_1$), et,
- au cours de séries d'étapes successives analogues aux séries d'étapes précédentes on affecte ainsi à la première combinaison ($C_1$) le nombre de pièces disponibles de chaque valeur, jusqu'à la dernière série d'étapes au cours de laquelle on détermine ledit nombre maximal (n-x) sans diminuer son montant de la valeur ($V_N$) d'une pièce de la dernière valeur,
- on détermine une deuxième combinaison ($C_2$) en procédant comme pour la première combinaison ($C_1$) mais à partir d'un ensemble de pièces disponibles dont sont exclues toutes les pièces ayant la plus forte valeur,
- on détermine une troisième combinaison ($C_3$) en procédant comme pour la première ($C_1$) et la deuxième ($C_2$) combinaison, mais à partir d'un ensemble de pièces disponibles dont sont exclues toutes les pièces ayant la plus forte valeur et la valeur immédiatement inférieure, et,
- on procède ainsi jusqu'à la dernière combinaison obtenue uniquement à partir des pièces disponibles de la valeur la plus faible, ou jusqu'à ce que, à la fin d'une desdites séries d'étapes, la somme à encaisser diminuée du montant des pièces déjà affectées à une combinaison devienne nulle ou négative.

4. Procédé d'encaissement selon la revendication 3, dans lequel, pour déterminer ledit nombre maximal (n-x), on procède par essais et erreurs à partir du nombre total (n) de pièces disponibles ayant la première valeur, que l'on diminue, unité par unité, jusqu'au dit nombre maximal (n-x).

5. Dispositif d'encaissement d'au moins une somme d'argent (D) à l'aide d'une combinaison de pièces de monnaie prises parmi un ensemble de pièces disponibles, comprenant :
   - des moyens (2,3), pour déterminer la valeur de chacune des pièces disponibles ($8_a$-$8_d$) et le nombre de pièces disponibles pour chaque valeur déterminée,
   - des moyens de calcul (3), agencés pour calculer le montant d'une pluralité de combinaisons ($C_1$-$C_4$) différentes de pièces disponibles, et pour déterminer, parmi les montants ($M_1$-$M_3$) desdites combinaisons, le montant ($M_2$) supérieur ou égal à et le plus proche de la somme (D) à encaisser, et,
   - des moyens d'encaissement (4-7) commandés par lesdits moyens de calcul (3) pour encaisser une ($C_3$) des combinaisons ayant ledit montant ($M_2$) le plus proche, et restituer à l'usager les pièces non encaissées,
   dispositif caractérisé par le fait que:
   - lesdits moyens de calcul sont agencés pour, préalablement audit calcul, sélectionner ladite pluralité de combinaisons de telle manière que chaque combinaison ait un montant ($M_1$-$M_3$) supérieur ou égal au montant de la somme (D) à encaisser et que figurent dans ladite pluralité une ou plusieurs combinaisons dont le montant soit, parmi toutes les combinaisons possibles dont le montant est supérieur ou égal à la somme à encaisser, le plus proche du montant de la somme à encaisser, ou égal à ce montant,
   - et qu'il comprend une mémoire pour mémoriser, lors dudit calcul, le montant associé à chaque combinaison sélectionnée.

6. Dispositif d'encaissement selon la revendication 5, dans lequel lesdits moyens de calcul (3) sont agencés pour :
   - calculer le volume ($VO_2$, $VO_3$) de chaque combinaison ($C_2$, $C_3$) ayant ledit montant ($M_2$) le plus proche,

   - déterminer, parmi les volumes calculés, le volume ($VO_3$) le plus faible,
   - et commander lesdits moyens d'encaissement (4-7) pour encaisser une ($C_3$) des combinaisons ayant ledit volume ($VO_3$) le plus faible.

7. Dispositif selon l'une des revendications 5 ou 6, dans lequel lesdits moyens de calcul (3) sont agencés pour :
   - déterminer une première ($C_1$) desdites combinaisons en accomplissant les tâches suivantes :
     - au cours d'une première série d'étapes, affectation à la première combinaison ($C_1$) d'un nombre de pièces disponibles ayant la plus forte valeur en accomplissant les tâches suivantes :
       - classement des valeurs des pièces disponibles de façon décroissante depuis la première ($V_A$), la plus forte, jusqu'à la dernière ($V_N$), la plus faible,
       - détermination du nombre maximal (n-x) de pièces disponibles ayant la première valeur ($V_A$) dont le montant, diminué de la valeur ($V_N$) d'une pièce de la dernière valeur, soit inférieur au montant (D) de la somme à encaisser,
       - calcul d'un premier montant (S-$nV_A$) égal au montant (S) de la totalité des pièces disponibles, diminué du montant ($nV_A$) de la totalité des pièces disponibles ayant la première valeur,
       - calcul d'un second montant (D-$nV_A$-$xV_A$) égal au montant (D) de la somme à encaisser, diminué du montant dudit nombre maximal (n-x) de pièces ayant la première valeur,
       - comparaison du premier montant au second montant, et,
       - affectation à la première combinaison d'un nombre de pièces ayant la première valeur ($V_A$) égal audit nombre maximal (n-x) lorsque le premier montant est supérieur ou égal au second montant, et égal audit nombre maximal augmenté d'une unité (n-x+1) dans le cas contraire,
     - au cours d'une deuxième série d'étapes, affectation à la première combinaison ($C_1$) d'un nombre de pièces disponibles ayant la valeur immédiatement inférieure à la plus forte valeur en procédant comme dans la première étape, mais à partir d'un ensemble de pièces disponibles dont sont exclues toutes les pièces ayant la plus forte valeur, et d'une somme à encaisser dont le montant est diminué du montant des pièces déjà affectées à la première combinaison ($C_1$), et,

- au cours de séries d'étapes successives analogues aux séries d'étapes précédentes, affectation à la première combinaison ($C_1$) du nombre de pièces disponibles de chaque valeur, jusqu'à la dernière série d'étapes pour laquelle la détermination dudit nombre maximal (n-x) est faite sans diminuer son montant de la valeur ($V_N$) d'une pièce de la dernière valeur,

- déterminer une deuxième combinaison ($C_2$) en procédant comme pour la première combinaison ($C_1$), mais à partir d'un ensemble de pièces disponibles dont sont exclues toutes les pièces ayant la plus forte valeur,

- déterminer une troisième combinaison ($C_3$) en procédant comme pour la première ($C_1$) et la deuxième ($C_2$) combinaison, mais à partir d'un ensemble de pièces disponibles dont sont exclues toutes les pièces ayant la plus forte valeur et la valeur immédiatement inférieure, et,

- procéder ainsi jusqu'à la dernière combinaison obtenue uniquement à partir des pièces disponibles de la valeur la plus faible ou jusqu'à ce que, à la fin d'une desdites séries d'étapes, la somme à encaisser diminuée du montant des pièces déjà affectées à une combinaison devienne nulle ou négative.

8. Dispositif selon l'une des revendications 5 à 7, dans lequel la détermination dudit nombre maximal (n-x) est faite par essais et erreurs à partir du nombre total (n) de pièces disponibles ayant la première valeur, diminué, unité par unité, jusqu'au dit nombre maximal (n-x).

**Claims**

1. Method of collecting at least one sum of money (D) by means of a combination of coins taken from a set of available coins, in which:
   - the value of each of the available coins ($8_a$-$8_d$) is determined and also the number of available coins for each determined value,
   - the total of a plurality of different combinations ($C_1$-$C_4$) of available coins is calculated,
   - from the totals ($M_1$-$M_3$) of said combinations, the total ($M_2$) greater than or equal to and closest to the sum (D) to be collected is determined,
   - one ($C_3$) of the combinations having said total ($M_2$) is collected, and
   - the coins not allocated for the combination collected are returned to the user, characterised by the fact that:
   - prior to said calculation, said plurality of combinations is selected so that each combination has a total ($M_1$-$M_3$) greater than or equal to the total of the sum (D) to be collected and that there appear in said plurality one or more combinations whereof the total is, amongst all the possible combinations whereof the total is greater than or equal to the sum to be collected, closest to the total of the sum to be collected, or equal to this total, and
   - at the time of said calculation, the total associated with each selected combination is memorised.

2. Method of collection according to Claim 1, in which:
   - the volume ($VO_2$,$VO_3$) of each combination ($C_2$ ,$C_3$ ) having said closest total ($M_2$) is calculated,
   - from the volumes calculated, the smallest volume ($VO_3$) is determined, and,
   - one ($C_3$) of the combinations having said smallest volume ($VO_3$) is collected.

3. Method according to one of Claims 1 or 2, in which:
   - a first ($C_1$) of said combinations is determined by proceeding as follows:
     - during a first series of stages, a number of available coins having the greatest value is allocated to the first combination ($C_1$) by proceeding as follows:
       - the values of the available coins are classified in a decreasing manner from the first ($V_A$ ), the greatest, to the last ($V_N$), the smallest,
       - the maximum number (n-x) of available coins having the first value ($V_A$ ) whereof the total, decreased by the value ($V_N$ ) of a coin of the last value, is less than the total (D) of the sum to be collected, is determined,

- a first total $(S-nV_A)$ equal to the total $(S)$ of all the available coins, reduced by the total $(n\,V_A)$ of all the available coins having the first value $(V_A)$ is calculated,
- a second total $(D-nV_A-xV_A)$ equal to the total $(D)$ of the sum to be collected, reduced by the total of said maximum number $(n-x)$ of coins having the first value $(V_A)$ is calculated,
- the first total is compared with the second total, and,
- there is allocated to the first combination a number of coins having the first value $(V_A)$ equal to said maximum number $(n-x)$ when the first total is greater than or equal to the second total and equal to said maximum number increased by one unit $(n-x+1)$ in the contrary case,
- during a second series of stages, there is allocated to the first combination $(C_1)$ a number of available coins having the value immediately less than the greatest value by proceeding as in the first stage, but from a set of available coins from which all the coins having the greatest value are excluded and from a sum to be collected whereof the total is decreased by the total of the coins already allocated to the first combination $(C_1)$, and,
- during successive series of stages similar to the preceding series of stages, one thus allocates to the first combination $(C_1)$ the number of available coins of each value, until the last series of stages during which one determines said maximum number $(n-x)$ without reducing its total by the value $(V_N)$ of a coin of the last value,
- a second combination $(C_2)$ is determined by proceeding as for the first combination $(C_1)$ but from a set of available coins from which all the coins having the greatest value are excluded,
- a third combination $(C_3)$ is determined by proceeding as for the first $(C_1)$ and the second $(C_2)$ combination, but from a set of available coins from which all the coins having the greatest value and the immediately lower value are excluded, and,
- one proceeds in this way up to the last combination obtained solely from the available coins of the lowest value, or until, at the end of one of said series of stages, the sum to be collected reduced by the total of the coins already allocated to a combination becomes zero negative.

4. Collection method according to Claim 3, in which, in order to determine the said maximum number $(n-x)$, one proceeds by trial and error from the total number $(n)$ of available coins having the first value, which is reduced, unit by unit, up to said maximum number $(n-x)$.

5. Device for collecting at least one sum of money $(D)$ by means of a combination of coins taken from a set of available coins, comprising:
- means (2, 3) for determining the value of each of the available coins $(8_a-8_d)$ and the number of available coins for each value determined,
- calculation means (3), arranged to calculate the total of a plurality of different combinations $(C_1-C_4)$ of available coins, and for determining, from the totals $(M_1-M_3)$ of said combinations, the total $(M_2)$ greater than or equal to and closest to the sum $(D)$ to be collected, and,
- collection means (4-7) controlled by said calculation means (3) for collecting one $(C_3)$ of the combinations having said closest total $(M_2)$ and returning the coins not collected to the user,
  device characterised by the fact that:
- said calculation means are arranged in order, prior to said calculation, to select said plurality of combinations in such a way that each combination has a total $(M_1-M_3)$ greater than or equal to the total of the sum $(D)$ to be collected and that appearing in said plurality are one or more combinations whereof the total is, amongst all the possible combinations whereof the total is greater than or equal to the sum to be collected, closest to the total of the sum to be collected, or equal to this total,
- and that it comprises a memory for memorising, at the time of said calculation, the total associated with each combination selected.

6. Collection device according to Claim 5, in which said calculation means (3) are arranged in order:

- to calculate the volume ($VO_2$, $VO_3$) of each combination ($C_2$, $C_3$) having said closest total ($M_2$),
- to determine, from the calculated volumes, the lowest volume ($VO_3$),
- and to control said collection means (4-7) in order to collect one ($C_3$) of the combinations having said lowest volume ($VO_3$).

7. Device according to one of Claims 5 or 6, in which said calculation means (3) are arranged in order:

- to determine a first ($C_1$) of said combinations by accomplishing the following tasks:
  - during a first series of stages, allocation to the first combination ($C_1$) of a number of available coins having the greatest value by accomplishing the following tasks:
    - classification of the values of the available coins in a decreasing manner from the first ($V_A$), the highest, to the last ($V_N$), the lowest,
    - determination of the maximum number (n-x) of available coins having the first value ($V_A$) whereof the total, reduced by the value ($V_N$) of a coin of the last value, is less than the total (D) of the sum to be collected,
    - calculation of a first total ($S-nV_A$) equal to the total (S) of all the available coins, decreased by the total ($nV_A$) of all the available coins having the first value,
    - calculation of a second total ($D-nV_A-xV_A$) equal to the total (D) of the sum to be collected, reduced by the total of said maximum number (n-x) of coins having the first value,
    - comparison of the first total with the second total, and,
    - allocation to the first combination of a number of coins having the first value ($V_A$) equal to said maximum number (n-x) when the first total is greater than or equal to the second total, and equal to said maximum number increased by one unit (n-x + 1) in the contrary case,
  - during a second series of stages, allocation to the first combination ($C_1$) of a number of available coins having the value immediately less than the greatest value by proceeding as in the first stage, but from a set of available coins from which all the coins having the greatest value are excluded, and from a sum to be collected whereof the total is reduced by the total of the coins already allocated to the first combination ($C_1$), and,
  - during successive series of stages similar to the preceding series of stages, allocation to the first combination ($C_1$) of the number of available coins of each value, until the last series of stages for which the determination of said maximum number (n-x) is made without reducing its total by the value ($V_N$) of a coin of the last value,
- determining a second combination ($C_2$) by proceeding as for the first combination ($C_1$), but from a set of available coins from which all the coins having the highest value are excluded,
- determining a third combination ($C_3$) by proceeding as for the first ($C_1$) and the second ($C_2$) combination, but from a set of available coins from which all the coins having the greatest value and the immediately lower value are excluded, and,
- proceeding in this way up to the last combination obtained solely from available coins of the lowest value or until, at the end of one of said series of stages, the sum to be collected reduced by the total of the coins already allocated to a combination becomes zero or negative.

8. Device according to one of Claims 5 to 7, in which the determination of said maximum number (n-x) is made by trial and error from the total number (n) of available coins having the first value, reduced, unit by unit, up to said maximum number (n-x).

## Patentansprüche

1. Verfahren zum Kassieren mindestens einer Geldsumme (D) mittels einer Kombination von Geldmünzen, die aus einer Gesamtmenge verfügbarer Münzen herausgegriffen werden, bei dem:
   - man den Wert jeder verfügbaren Münze (8a-8d) bestimmt und für jeden ermittelten Wert die Anzahl der verfügbaren Münzen bestimmt,
   - man den Betrag einer Vielzahl verschiedener Kombinationen ($K_1$-$K_4$) verfügbarer Münzen berechnet,

- man denjenigen Betrag ($B_2$) unter den Beträgen ($B_1$-$B_3$) dieser Kombinationen bestimmt, der größer oder gleich der einzuziehenden Summe (D) ist und ihr am nächsten kommt,
- man eine ($K_3$) der Kombinationen mit dem Betrag ($B_2$) einzieht und
- man dem Benutzer die der eingezogenen Kombination nicht zugeordneten Münzen zurückerstattet,

dadurch gekennzeichnet, daß:

- man vor der Berechnung die Vielzahl von Kombinationen so wählt, daß jede Kombination einen Betrag ($B_1$-$B_3$) aufweist, der größer oder gleich dem Betrag der einzuziehenden Summe (D) ist, und daß in dieser Vielzahl eine oder mehrere Kombinationen aufscheinen, deren Betrag von allen möglichen Kombinationen mit einem Betrag, der größer oder gleich der einzuziehenden Summe ist, dem Betrag der einzuziehenden Summe am nächsten kommt oder diesem Betrag entspricht, und
- man während der Berechnung den jeder gewählten Kombination zugehörigen Betrag speichert.

2. Kassierverfahren nach Anspruch 1, bei dem:
- man das Volumen ($VO_2$, $VO_3$) jeder Kombination ($K_2$, $K_3$), die den am nächsten kommenden Betrag ($B_2$) aufweist, berechnet,
- man unter den berechneten Volumina das geringste Volumen ($VO_3$) bestimmt und
- man eine ($K_3$) der Kombinationen, die dieses geringste Volumen ($VO_3$) aufweist, einzieht.

3. Verfahren nach einem der Ansprüche 1 oder 2, bei dem:
- man eine erste Kombination ($K_1$) bestimmt, indem man wie folgt verfährt:
  - man im Verlauf einer ersten Schrittfolge der ersten Kombination ($K_1$) eine Anzahl verfügbarer Münzen mit dem höchsten Wert zuordnet, indem man folgendermaßen vorgeht:
    - man die Werte der verfügbaren Münzen in einer vom ersten ($W_A$), dem höchsten, bis zum letzten ($W_N$), dem geringsten, fallenden Weise klassifiziert,
    - man die maximale Anzahl (n-x) verfügbarer Münzen mit dem Wert ($W_A$) bestimmt, deren Betrag, verringert um den Wert ($W_N$) einer Münze der letzten Wertkategorie, kleiner ist als der Betrag (D) der einzuziehenden Summe,
- man einen ersten Betrag ($S$-$nW_A$) berechnet, der dem Betrag (S) aller verfügbaren Münzen, verringert um den Betrag (n $W_A$) aller verfügbaren Münzen mit dem ersten Wert ($W_A$), entspricht,
- man einen zweiten Betrag ($D$-$nW_A$-$xW_A$) berechnet, der dem Betrag (D) der einzuziehenden Summe, verringert um den Betrag der maximalen Anzahl (n-x) von Münzen mit dem ersten Wert ($W_A$), entspricht,
- man den ersten Betrag mit dem zweiten Betrag vergleicht und
- man der ersten Kombination eine Anzahl von Münzen mit dem ersten Wert ($W_A$) zuordnet, die der maximalen Anzahl (n-x) entspricht, wenn der erste Betrag größer ist als der zweite Betrag oder mit diesem übereinstimmt, und die im umgekehrten Falle der um eine Einheit erhöhten maximalen Anzahl (n-x + 1) entspricht,
- man im Verlauf einer zweiten Schrittfolge der ersten Kombination ($K_1$) eine Anzahl verfügbarer Münzen mit dem in bezug auf den höchsten Wert nächstkleineren Wert zuordnet, indem wie beim ersten Schritt vorgegangen wird, jedoch ausgehend von einem Satz verfügbarer Münzen, von dem alle Münzen mit dem höchsten Wert ausgeschlossen sind, und unter Zugrundelegung einer einzuziehenden Summe, deren Betrag um den Betrag der Münzen, die bereits der ersten Kombination ($K_1$) zugeordnet worden sind, verringert ist, und
- man auf diese Weise im Verlauf aufeinanderfolgender Schrittfolgen, die analog zu den vorausgehenden Schrittfolgen sind, der ersten Kombination ($K_1$) eine Anzahl verfügbarer Münzen jeden Werts zuordnet, und zwar bis zur letzten Schrittfolge, in deren Verlauf man die besagte maximale Anzahl (n-x) bestimmt, ohne ihren Betrag um den Wert ($W_N$) einer Münze der letzten Wertkategorie zu vermindern,
- man eine zweite Kombination ($K_2$) bestimmt, indem man wie bei der ersten Kombination ($K_1$) verfährt, jedoch ausgehend von einem Satz verfügbarer Münzen, von dem alle Münzen mit dem höchsten Wert ausgeschlossen sind,

- man eine dritte Kombination ($K_3$) bestimmt, indem man wie bei der ersten ($K_1$) und der zweiten ($K_2$) Kombination verfährt, jedoch ausgehend von einem Satz verfügbarer Münzen, von dem alle Münzen mit dem höchsten Wert und dem nächstkleineren Wert ausgeschlossen sind, und

- man so bis zur letzten Kombination verfährt, die man allein unter Zugrundelegung der verfügbaren Münzen mit dem geringsten Wert erhält, oder solange, bis am Ende einer der genannten Schrittfolgen die einzuziehende Summe, verringert um den Betrag der Münzen, die bereits einer Kombination zugeordnet worden sind, gleich Null oder negativ wird.

4. Kassierverfahren nach Anspruch 3, bei dem man, um die maximale Anzahl (n-x) zu bestimmen, mittels Versuch und Irrtum verfährt, und zwar ausgehend von der Gesamtzahl (n) der verfügbaren Münzen mit dem ersten Wert, die man, Einheit für Einheit, bis zu dieser maximalen Anzahl (n-x) verringert.

5. Vorrichtung zum Kassieren mindestens einer Geldsumme (D) mittels einer Kombination von Geldmünzen, die aus einer Gesamtmenge verfügbarer Münzen herausgegriffen werden, umfassend:

- Mittel (2, 3), um den Wert jeder verfügbaren Münze (8a-8d) zu bestimmen und um für jeden ermittelten Wert die Anzahl der verfügbaren Münzen zu bestimmen,

- Rechenmittel (3), vorgesehen, um den Betrag einer Vielzahl verschiedener Kombinationen ($K_1$-$K_4$) verfügbarer Münzen zu berechnen und um denjenigen Betrag ($B_2$) unter den Beträgen ($B_1$-$B_3$) dieser Kombinationen zu bestimmen, der größer oder gleich der einzuziehenden Summe (D) ist und ihr am nächsten kommt, und

- Kassiermittel (4-7), die von den Rechenmitteln (3) so gesteuert werden, daß sie eine ($K_3$) der Kombinationen, die den am nächsten kommenden Betrag ($B_2$) aufweist, einzieht und dem Benutzer die nicht eingezogenen Münzen zurückerstattet,

Vorrichtung, dadurch gekennzeichnet, daß:

- die Rechenmittel vorgesehen sind, um vor der Berechnung die Vielzahl von Kombinationen so zu wählen, daß jede Kombination einen Betrag ($B_1$-$B_3$) aufweist, der größer oder gleich dem Betrag der einzuziehenden Summe (D) ist, und daß in dieser Vielzahl eine oder mehrere Kombinationen aufscheinen, deren Betrag von allen möglichen Kombinationen mit einem Betrag, der größer oder gleich der einzuziehenden Summe ist, dem Betrag der einzuziehenden Summe am nächsten kommt oder diesem Betrag entspricht,

- und daß sie einen Speicher umfaßt, um während der Berechnung den jeder gewählten Kombination zugehörigen Betrag zu speichern.

6. Kassiervorrichtung nach Anspruch 5, bei der die Rechenmittel (3) vorgesehen sind, um:

- das Volumen ($VO_2$, $VO_3$) jeder Kombination ($K_2$, $K_3$), die den am nächsten kommenden Betrag ($B_2$) aufweist, zu berechnen,

- unter den berechneten Volumina das geringste Volumen ($VO_3$) zu bestimmen

- und die Kassiermittel (4-7) so zu steuern, daß sie eine ($K_3$) der Kombinationen, die dieses geringste Volumen ($VO_3$) aufweist, einzieht.

7. Vorrichtung nach einem der Ansprüche 5 oder 6, bei der die Rechenmittel (3) vorgesehen sind, um:

- eine erste Kombination ($K_1$) zu bestimmen, indem sie die folgenden Aufgaben erfüllen:

- im Verlauf einer ersten Schrittfolge die Zuordnung einer Anzahl verfügbarer Münzen mit dem höchsten Wert zur ersten Kombination ($K_1$), indem sie die folgenden Aufgaben lösen:

• Klassifizierung der Werte der verfügbaren Münzen in einer vom ersten ($W_A$), dem höchsten, bis zum letzten ($W_N$), dem geringsten, fallenden Weise,

• Bestimmung der maximalen Anzahl (n-x) verfügbarer Münzen mit dem Wert ($W_A$), deren Betrag, verringert um den Wert ($W_N$) einer Münze der letzten Wertkategorie, kleiner ist als der Betrag (D) der einzuziehenden Summe,

• Berechnung eines ersten Betrags ($S-nW_A$), der dem Betrag (S) aller verfügbaren Münzen, verringert um den Betrag ($n\ W_A$) aller verfügbaren Münzen mit dem ersten Wert, entspricht,

• Berechnung eines zweiten Betrags $(D-nW_A-xW_A)$, der dem Betrag $(D)$ der einzuziehenden Summe, verringert um den Betrag der maximalen Anzahl $(n-x)$ von Münzen mit dem ersten Wert $(W_A)$, entspricht,

• Vergleich des ersten Betrags mit dem zweiten Betrag und

• Zuordnung einer Anzahl von Münzen mit dem ersten Wert $(W_A)$ zur ersten Kombination, wobei diese Anzahl der maximalen Anzahl $(n-x)$ entspricht, wenn der erste Betrag größer ist als der zweite Betrag oder mit diesem übereinstimmt, und im umgekehrten Falle der um eine Einheit erhöhten maximalen Anzahl $(n-x+1)$ entspricht,

- im Verlauf einer zweiten Schrittfolge die Zuordnung einer Anzahl verfügbarer Münzen mit dem in bezug auf den höchsten Wert nächstkleineren Wert zur ersten Kombination $(K_1)$, indem sie wie beim ersten Schritt vorgehen, jedoch ausgehend von einem Satz verfügbarer Münzen, von dem alle Münzen mit dem höchsten Wert ausgeschlossen sind, und unter Zugrundelegung einer einzuziehenden Summe, deren Betrag um den Betrag der Münzen, die bereits der ersten Kombination $(K_1)$ zugeordnet worden sind, verringert ist, und

- im Verlauf aufeinanderfolgender Schrittfolgen, die analog zu den vorausgehenden Schrittfolgen sind, Zuordnung einer Anzahl verfügbarer Münzen jeden Werts zur ersten Kombination $(K_1)$, und zwar bis zur letzten Schrittfolge, bei der die Bestimmung der besagten maximalen Anzahl $(n-x)$ erfolgt, ohne daß ihr Betrag um den Wert $(W_N)$ einer Münze der letzten Wertkategorie vermindert wird,

- eine zweite Kombination $(K_2)$ zu bestimmen, wobei sie wie bei der ersten Kombination $(K_1)$ verfahren, jedoch ausgehend von einem Satz verfügbarer Münzen, von dem alle Münzen mit dem höchsten Wert ausgeschlossen sind,

- eine dritte Kombination $(K_3)$ zu bestimmen, wobei sie wie bei der ersten $(K_1)$ und der zweiten $(K_2)$ Kombination verfahren, jedoch ausgehend von einem Satz verfügbarer Münzen, von dem alle Münzen mit dem höchsten Wert und dem nächstkleineren Wert ausgeschlossen sind, und

- auf diese Weise bis zur letzten Kombination zu verfahren, die allein unter Zugrundelegung der verfügbaren Münzen mit dem geringsten Wert erhalten wird, oder solange, bis am Ende einer der genannten Schrittfolgen die einzuziehende Summe, verringert um den Betrag der Münzen, die bereits einer Kombination zugeordnet worden sind, gleich Null oder negativ wird.

8. Vorrichtung nach einem der Ansprüche 5 bis 7, bei der die Bestimmung der maximalen Anzahl $(n-x)$ durch Versuch und Irrtum erfolgt, und zwar ausgehend von der Gesamtzahl $(n)$ der verfügbaren Münzen mit dem ersten Wert, die, Einheit für Einheit, bis zu dieser maximalen Anzahl $(n-x)$ verringert wird.

FIG.1

DETERMINATION DE LA COMBINAISON A ENCAISSER POUR UNE SOMME A ENCAISSER D ET UN MONTANT DISPONIBLE S DE COMPOSITION COS AVEC $COS=(V_a, n_a; V_b, n_b; ...)$

DETERMINATION DE LA PLURALITE DE COMBINAISONS ⟶ 10

CALCUL DU MONTANT DE CHAQUE COMBINAISON ⟶ 20

DETERMINATION DU MONTANT LE PLUS PROCHE DE D ⟶ 30

CALCUL DU VOLUME DE COMBINAISONS AYANT LE MONTANT LE PLUS PROCHE ⟶ 40

DETERMINATION DU VOLUME LE PLUS FAIBLE ⟶ 50

COMMANDE DE L'ENCAISSEMENT D'UNE COMBINAISON AYANT LE VOLUME LE PLUS FAIBLE ⟶ 60

FIN

FIG.2

17

DETERMINATION DE LA PLURALITE DE COMBINAISONS POUR UNE SOMME A ENCAISSER D ET UN MONTANT DISPONIBLE S DE COMPOSITION COS AVEC: COS = $(V_a, n_a ; V_b, n_b ; ...)$  10

DETERMINATION D'UNE COMBINAISON  100

COS = COS MOINS TOUTES LES PIECES DE PLUS FORTE VALEUR $V_i$. $S = S - n_i V_i$  200

FIN

FIG.3

FIG. 4